# EUROPÄISCHE PATENTSCHRIFT

(11) **EP 2 597 323 B1**
(45) Veröffentlichungstag und Bekanntmachung des Hinweises auf die Patenterteilung: **12.04.2017**
(21) Anmeldenummer: 12007919.9
(22) Anmeldetag: 23.11.2012
(51) Int. Cl.: F16B 33/06, F16B 39/22

(54) **Gewindebeschichtung**
Thread coating
Revêtement de filetage

(30) Priorität: 23.11.2011 DE 102011119142
(43) Veröffentlichungstag der Anmeldung: 29.05.2013
(73) Patentinhaber: GESI Gewindesicherungs-GmbH, 73207 Plochingen (DE)
(72) Erfinder: Baumann, Waldemar, 73734 Esslingen (DE)
(74) Vertreter: Schöneborn, Holger

(56) Entgegenhaltungen:
- EP-A2- 0 409 419
- WO-A1-00/57070
- WO-A2-2004/024841
- DE-A1- 4 204 365

## Beschreibung

Die Erfindung betrifft ein Gewindeteil, insbesondere eine Schraube, eine Mutter oder einen Gewindestift, welches ein Gewinde aufweist, das zumindest teilweise mit einer Beschichtung versehen ist, die der Sicherung des Gewindes nach Verschraubung mit einem Gegengewinde dient.

Um das ungewollte Lösen oder Lockern einer Schraubverbindung zu verhindern, sind aus dem Stand der Technik unterschiedliche Maßnahmen bekannt. Das Lösen von Schraubverbindungen ist insbesondere eine Folge von Relativbewegungen zwischen den miteinander verbundenen Komponenten, beispielsweise in Form von Vibrationen. Auch Temperaturschwankungen und Korrosion können zur Lockerung einer Schraubverbindung führen. Neben mechanischen Schraubensicherungen wie dem Einsatz eines Splints, einer selbsthemmenden Mutter oder der Verwendung von Zahnscheiben sind auch Schraubensicherungen durch Einsatz einer Beschichtung auf dem Gewinde bekannt. Dabei wird unterschieden zwischen klebenden und klemmenden Gewindesicherungen.

Bei einer Klebesicherung, die als Losdrehsicherung wirkt, wird das selbsttätige Losdrehen der Gewindeverbindung durch Verkleben von Bolzengewinde und Muttergewinde ausgeschlossen, hierbei bleibt die eingesetzte Vorspannkraft weitgehend erhalten. Eine Klebesicherung wird typischerweise dadurch erreicht, dass Mikrokapseln, die einerseits einen zu polymerisierenden Klebstoff, andererseits einen Härter enthalten, auf das Bolzen- und/oder Muttergewinde aufgebracht werden. Beim Verschrauben der Gewinde miteinander werden die Mikrokapseln zerstört und ihr Inhalt freigesetzt und durchmischt. Die chemische Reaktion (Polymerisation) zwischen Klebstoff und Härter bewirkt die gewünschte Sicherungswirkung. Mit Hilfe einer Klebesicherung kann eine Gewindesicherung herbeigeführt werden, die den Anforderungen von DIN 267, Teil 27 entspricht.

Ein Vorteil einer Klebesicherung ist die hohe Sicherungswirkung, auch bei hoher dynamischer Querbeanspruchung. Darüber hinaus wird eine gute Abdichtung auch bei Vorliegen hoher Drücke erreicht. Auf der anderen Seite bietet eine Klebesicherung, wenn das Gewinde einmal gelöst wurde, praktisch keine weitere Sicherung mehr. Darüber hinaus muss bei der Verarbeitung beachtet werden, dass es sich um ein relativ schnell härtendes System handelt, d. h. nach Einschrauben des Bolzengewindes in die zugehörige Mutter und der damit verbundenen Zerstörung der Mikrokapseln verbleiben nur einige Minuten, um das gewünschte Anziehdrehmoment zur Erzielung der Vorspannkraft aufzubringen. Auch Justiervorgänge sollten innerhalb dieser relativ kurzen Zeitspanne abgeschlossen sein, da sonst mit einer Zerstörung des Polymerisationsgefüges gerechnet werden muss. Die vollständige Aushärtung ist hingegen meist erst nach ca. 24 Stunden erreicht.

Daneben sind auch sog. Klemmsicherungen nach DIN 267, Teil 28 bekannt. Diese wirken jedoch im Gegensatz zu einer Klebesicherung nicht als Losdreh-, sondern als Verliersicherung, d. h. sie können ein teilweises Losdrehen nicht verhindern, wohl aber ein vollständiges Auseinanderfallen der Schraubverbindung. Durch die Aufbringung einer eine Klemmwirkung zwischen den Gewinden herbeiführenden Beschichtung wird dem selbsttätigen Lösen der Schraubverbindung entgegengewirkt. Die klemmende Wirkung basiert auf einem Reibschluss zwischen Bolzengewinde und Muttergewinde. Ein Vorteil einer Klemmsicherung ist darin zu sehen, dass auch nach partiellem Lösen der Sicherung eine weitere Sicherung gegeben ist. Darüber hinaus wird auch mit einer Klemmsicherung eine gute Abdichtung erzeugt. Eine Zeitbeschränkung beim Aufbringen des gewünschten Anziehdrehmomentes oder bei Justiervorgängen besteht nicht. Auf der anderen Seite stellt eine Klemmsicherung keine Losdrehsicherung dar, die jegliche Lockerung der Schraubverbindung wirkungsvoll verhindert.

Als Trägermaterial für Mikrokapseln wird meist ein Harzgebinde verwendet, das nur relativ langsam und mit hohem Energieaufwand durch Applizieren von Warmluft aushärtet. Beim Einsatz einer klemmenden Beschichtung kommt häufig ein Polyamidpulver zum Einsatz, das auf das Gewinde bei einer Temperatur von ca. 230°C aufgeschmolzen wird. Anschließend wird das beschichtete Gewinde meistdurch ein Abkühlbecken geführt. Aus der EP 0 409 419 A2 sind darüber hinaus auch UV-härtbare Beschichtungen bekannt, basierend auf einem Acrylatzusammen mit einem Fotoinitiator.

Es stelltsich som itdie Aufgabe, eine weiter verbesserte Gewindebeschichtung zur Verfügung zu stellen.

Diese Aufgabe wird erfindungsgemäß gelöst durch ein Gewindeteil, insbesondere eine Schraube, eine Mutter oder einen Gewindestift, welches ein Gewinde aufweist,das zum indestteilweise miteiner Beschichtung versehen ist, die der Sicherung des Gewindes nach Verschraubung m iteinem Gegengewinde dient, wobei die Beschichtung einen UV-Lack enthält und in den UV-Lack Mikrokapseln eingebettetsind, wobei zum indestein Teil der Mikrokapseln einen polymerisierbaren Klebstoffund ein weiterer Teil der Mikrokapseln einen Härter enthält und wobei die Klebstoff enthaltenden Mikrokapseln ungesättigtes (Meth)acrylat oder ungesättigte Polyester enthalten und der Härter ein Peroxid is t.

Ein UV-Lack istein Lack, derdurch Einwirkung von UV-Strahlung aushärtet. Bei Bestrahlung mit UV-Licht wird eine Vernetzungsreaktion in Gang gesetzt, die zu einer Aus härtung innerhalb kurzer Zeit, meist innerhalb weniger Sekunden führt. Anschließend können die Gewindeteile direkt weiterverarbeitet werden.

Es hat sich herausgestellt, dass UV-Lacke sowohl zur Erzeugung einer klemmenden Beschichtung als auch als Trägermaterial für Klebstoffenthaltende Mikrokapseln ebenso gut geeignet sind wie bislang verwendete Systeme. Die erzeugte Klemmwirkung stehtdem selbständigen Lösen der Schraubverbindung entgegen und erfüllt die Anforderungen nach DIN 267, Teil 28.

Die Herbeiführung einer klemmenden Beschichtung mit Hilfe eines UV-Lacks hat verschiedene Vorteile. Insbesondere härtet die Beschichtung bei UV-Bestrahlung sehr rasch aus, d. h. die Bearbeitungszeit wird verkürzt und der Durchsatz erhöht. Darüber hinaus ist der Beschichtungsprozess auch weniger energieaufwändig. Bislang musste bei einem Aufschmelzprozess unter Verwendung von Polyamidpulver auf eine Temperatur von ca. 230°C erhitzt werden. Bei einer Beschichtung mit UV-Lack tritt kaum Erwärmung auf, d. h. es wird zum einen Energieeingespart,zum anderen istdiese Artder Beschichtung für praktisch alle Werkstoffe einsetzbar. Auch auf das Abkühlbecken kann verzichtet werden.

Ein weiterer Vorteil istdarin zu sehen, dass die Beschichtung sauberer erfolgen kann als bei Aufbringen eines Polyamidpulvers, d.h. der Materialverlust ist geringer. Darüber hinaus verbleibt normalerweise kein Sprühnebel auf den Gewindeteilen.

Typischerweise enthält der UV-Lack im nicht-ausgehärteten Zustand ungesättigte Verbindungen mit (Meth)acrylsäurefunktion und zumindesteinen Fotoinitiator. Bei den ungesättigten Verbindungen handelt es sich meist um ungesättigte Polymere der (Meth)acrylsäure oder von (Meth)acrylsäurederivaten, insbesondere von (Meth)acrylsäureestern. Soweit im Rahmen dieser Erfindung von Acryl bzw. Acrylat die Rede ist, wird hierunter auch stets Methacryl bzw. Methacrylat verstanden, meisthandeltes sich jedoch um Acrylsäure bzw. die entsprechenden Derivate der Acrylsäure, insbesondere Acrylsäureester.

Als Fotoinitiatoren können insbesondere aromatische Ketone eingesetzt werden, die auch als Phenone bezeichnet werden. Typische Beispiele sind Benzophenon oder substituiertes Benzophenon, beispielsweise 4-Methylbenzophenon. Ein weiteres verwendbares aromatisches Keton ist 2-Hydroxy-2-methylpropiophenon. Selbstverständlich können jedoch auch andere geeignete Fotoinitiatoren zum Einsatz kommen. Bei Bestrahlung mit UV-Licht zerfallen die Fotoinitiatoren unter Bildung von Radikalen und aktivieren den Polymerisationsprozess. Ein Beispiel für ein polymerisierbares Acrylat ist Tetrahydrofurfurylacrylat oder 1,6-Hexandioldiacrylat.

Des Weiteren können Hilfsstoffe, beispielsweise Additive und Reaktivverdünner vorhanden sein.

Der UV-Lack dient jedoch nicht nur zur Herbeiführung einer klemmenden Beschichtung, sondern auch als Trägermaterial für Mikrokapseln, um eine klebende Beschichtung zu erzeugen. In den UV-Lack sind Mikrokapseln eingebettet, die beim Verschrauben des Gewindeteiles mit einem Gegengewinde zerstört werden. Zumindest ein Teil der Mikrokapseln enthält einen Klebstoff, der bei Zerstörung der Mikrokapseln freigesetzt wird. Ein weiterer Teil der Mikrokapseln enthälteinen Härter,auch dieserwird somitbeim Verschrauben frei. Bei Kontakt des Klebstoffs mit dem Härter erfolgt eine Polymerisationsreaktion, die für eine fest haftende Verklebung der Gewinde sorgt. Eine Lockerung der Schraubverbindung ist somit auch bei starken Vibrationen oder Temperaturschwankungen nahezu ausgeschlossen. Unter Umständen bewirktderals Trägermaterial für die Mikrokapseln verwendete UV-Lack darüber hinaus einen Reibschluss zwischen Gewinde und Gegengewinde, so dass selbst nach einem partiellen Lösen der Schraubverbindung noch eine ausreichende Verliersicherung sichergestellt ist, die eine vollständige Lösung der Schraubverbindung verhindert. Für die Erzeugung einer klemmenden Beschichtung ist jedoch auch die Kombination des Mikrokapseln enthaltenden UV-Lacks mit einer aus dem Stand der Technik bekannten Beschichtung, beispielsweise in Form eines Polyam ids, möglich.

Im Vergleich zum Stand der Technik, in dem als Trägermaterial für die Mikrokapseln ein Harzgebinde verwendet wurde, weist die Erfindung verschiedene Vorteile auf. Die Aushärtung des UV-Lacks durch Bestrahlung erfolgt erheblich schneller und mitweniger Energieaufwand. Bislang wurden die Harzgebinde meist mit Warmluft getrocknet, wobei es sich um einen relativ langsamen Prozess handelt. Entsprechend erhöhtsich durch Verwendung eines UV-Lacks die Fertigungsstückzahl pro Zeiteinheit. Gleichzeitig fällt auch die Belästigung der an der Beschichtungsanlage tätigen Mitarbeiter durch Trocknungsluft weg.

Für die Erzeugung der Klebewirkung kann insbesondere ein ungesättigtes (Meth)acrylat als Klebstoffinnerhalb der Mikrokapseln zum Einsatzkommen. Als Härter wird ein Radikalbildner, nämlich ein Peroxid verwendet, welches die radikalische Polymerisation des (Meth)acrylates in Gang setzt.

Eine weitere Klasse von Klebstoffsystemen, die in mikroverkapselter Form zum Einsatz kommen können, sind Polyestersysteme. Es handelt sich um ungesättigte Polyester. Neben den bereits oben erwähnten (Meth)acrylsäureestern kann es sich auch um Polyester handeln, die sich von Maleinsäure, Fumarsäure oder Itaconsäure ableiten. Beim Härter handelt es sich um Peroxide. Mikrokapseln sind aus dem Stand der Technik bekannt, bs pw. aus der WO 95/33554 A1.

Die Beschichtung des Gewindes mit oder ohne Mikrokapseln kann unterschiedlich sein. Es istbeispielsweise möglich, eine Rundumbeschichtung vorzusehen, ebenso möglich ist jedoch auch eine nur bereichsweise Beschichtung des Gewindes, beispielsweise in Form eines runden oder ovalen Flecks.

Neben dem erfindungsgemäßen Gewindeteil betrifft die Erfindung auch ein Verfahren zur Herstellung eines erfindungsgemäßen Gewindeteils. Dabei wird ein nicht-ausgehärteter UV-Lack auf das Gewinde aufgebracht und anschließend einer UV-Bestrahlung ausgesetzt.

Hierbei kann unterschiedlich vorgegangen werden. Zum einen ist es möglich, den UV-Lack im nicht-ausgehärteten Zustand zunächstmitden Mikrokapseln zu vermischen, danach auf das Gewinde aufzubringen und schließlich durch UV-Bestrahlung auszuhärten. Zum anderen ist es jedoch auch möglich, zunächst lediglich den UV-Lack (nicht-ausgehärtet) auf das Gewinde aufzubringen und erstanschließend die Mikrokapseln in den UV-Lack einzubringen. Danach wird schließlich der UV-Lack wiederum durch UV-Bestrahlung ausgehärtet.

Neben dem erfindungsgemäßen Gewindeteil betrifft die Erfindung auch ein Verfahren zur Herstellung eines erfindungsgemäßen Gewindeteils. Dabei wird ein nicht-ausgehärteter UV-Lack auf das Gewinde aufgebracht und anschließend einer UV-Bestrahlung ausgesetzt.

Wenn der UV-Lack als Trägermaterial für Klebstoff und ggf. Härter enthaltende Mikrokapseln dient, kann unterschiedlich vorgegangen werden. Zum einen ist es möglich, den UV-Lack im nicht-ausgehärteten Zustand zunächst mit den Mikrokapseln zu vermischen, danach auf das Gewinde aufzubringen und schließlich durch UV-Bestrahlung auszuhärten. Zum anderen ist es jedoch auch möglich, zunächst lediglich den UV-Lack (nicht-ausgehärtet) auf das Gewinde aufzubringen und erst anschließend die Mikrokapseln in den UV-Lack einzubringen. Danach wird schließlich der UV-Lack wiederum durch UV-Bestrahlung ausgehärtet.

## Patentansprüche

1. Gewindeteil, insbesondere Schraube, Mutter oder Gewindestift, welches ein Gewinde aufweist, das zumindest teilweise mit einer Beschichtung versehen ist, die der Sicherung des Gewindes nach Verschraubung mit einem Gegengewinde dient, wobei die Beschichtung einen UV-Lack enthält und in den UV-Lack Mikrokapseln eingebettet sind, wobei zumindest ein Teil der Mikrokapseln einen polymerisierbaren Klebstoff und ein weiterer Teil der Mikrokapseln einen Härter enthält,
**dadurch gekennzeichnet, dass** die Klebstoff enthaltenden Mikrokapseln ungesättigtes (Meth)acrylat oder ungesättigte Polyester enthalten und der Härter ein Peroxid ist.

2. Gewindeteil nach Anspruch 1, **dadurch gekennzeichnet, dass** der UV-Lack im nicht-ausgehärteten Zustand ungesättigte Verbindungen mit (Meth)acrylsäurefunktion und zumindest einen Fotoinitiator enthält.

3. Gewindeteil nach Anspruch 2, **dadurch gekennzeichnet, dass** der UV-Lack im nicht-ausgehärteten Zustand ungesättigte Polymere der (Meth)acrylsäure oder von (Meth)acrylsäurederivaten, insbesondere (Meth)acrylsäureestern, enthält.

4. Gewindeteil nach Anspruch 2 oder 3, **dadurch gekennzeichnet, dass** der Fotoinitiator ein aromatisches Keton ist, insbesondere ein substituiertes oder nicht-substituiertes Benzophenon.

5. Verfahren zur Herstellung eines Gewindeteils nach einem der Ansprüche 1 bis 4, **dadurch gekennzeichnet, dass** ein nicht-ausgehärteter UV-Lack auf das Gewinde aufgebracht und anschließend einer UV-Bestrahlung ausgesetzt wird, wobei entweder der nicht-ausgehärtete UV-Lack vor der Aufbringung auf das Gewinde mit Mikrokapseln vermischt wird oder nach Aufbringung des nicht-ausgehärteten UV-Lacks auf das Gewinde und vor der UV-Bestrahlung Mikrokapseln in den auf dem Gewinde befindlichen UV-Lack eingebracht werden, wobei die Mikrokapseln ungesättigtes (Meth)acrylat oder ungesättigte Polyester als polymerisierbaren Klebstoff enthalten.

## Claims

1. Screw-thread part, in particular screw, bolt, nut or grub screw, having a screw thread that at least to some extent has a coating which serves to secure the screw thread after screw-connection to a mating screw thread, wherein the coating comprises a UV lacquer and there are microcapsules embedded into the UV lacquer, where at least a portion of the microcapsules comprises a polymerizable adhesive and another portion of the microcapsules comprises a hardener,
**characterized in that**
the microcapsules comprising adhesive comprise unsaturated (meth)acrylate or unsaturated polyesters and the hardener is a peroxide.

2. Screw-thread part according to Claim 1, **characterized in that** the UV lacquer in the unhardened state comprises unsaturated compounds having (meth)acrylic acid function and comprises at least one photoinitiator.

3. Screw-thread part according to Claim 2, **characterized in that** the UV lacquer in the unhardened state comprises unsaturated polymers of (meth)acrylic acid or of (meth)acrylic acid derivatives, in particular of (meth)acrylic esters.

4. Screw-thread part according to Claim 2 or 3, **characterized in that** the photoinitiator is an aromatic ketone, in particular a substituted or unsubstituted benzophenone.

5. Process for the production of a screw-thread part according to any of Claims 1 to 4, **characterized in that** an unhardened UV lacquer is applied to the screw thread and then is exposed to UV irradiation, where either the unhardened UV lacquer is mixed with microcapsules before application to the screw thread or microcapsules are introduced into the UV lacquer located on the screw thread after application of the unhardened UV lacquer to the screw thread and before the UV irradiation, where the microcapsules comprise unsaturated (meth)acrylate or unsaturated polyesters as polymerizable adhesive.

## Revendications

1. Pièce filetée, en particulier vis, écrou ou tige filetée, qui présente un filetage, qui est au moins partiellement pourvu d'un revêtement qui sert à la sécurisation du filetage après vissage avec un contre-filetage, le revêtement contenant une laque UV et des microcapsules étant incorporées dans la laque UV, au moins une partie des microcapsules contenant un adhésif polymérisable et une autre partie des microcapsules contenant un durcisseur, **caractérisée en ce que** les microcapsules contenant un adhésif contiennent un (méth)acrylate insaturé ou un polyester insaturé et le durcisseur est un peroxyde.

2. Pièce filetée selon la revendication 1, **caractérisée en ce que** la laque UV, à l'état non durci, contient des composés insaturés présentant une fonction acide (méth)acrylique et au moins un photo-initiateur.

3. Pièce filetée selon la revendication 2, **caractérisée en ce que** la laque UV, à l'état non durci, contient des polymères insaturés de l'acide (méth)acrylique ou de dérivés de l'acide (méth)acrylique, en particulier d'esters de l'acide (méth)acrylique.

4. Pièce filetée selon la revendication 2 ou 3, **caractérisée en ce que** le photo-initiateur est une cétone aromatique, en particulier une benzophénone substituée ou non substituée.

5. Procédé pour la préparation d'une pièce filetée selon l'une quelconque des revendications 1 à 4, **caractérisé en ce qu'**une laque UV non durcie est appliquée sur le filetage et ensuite soumise à une irradiation par des UV, la laque non durcie étant mélangée avec des microcapsules avant l'application sur le filetage ou alors des microcapsules étant introduites dans la laque UV se trouvant sur le filetage après l'application de la laque UV non durcie sur le filetage et avant l'irradiation par des UV, les microcapsules contenant un (méth)acrylate insaturé ou un polyester insaturé comme adhésif polymérisable.
